# EUROPÄISCHE PATENTSCHRIFT

(11) **EP 1 035 369 B1**
(45) Veröffentlichungstag und Bekanntmachung des Hinweises auf die Patenterteilung: **29.09.2004**
(21) Anmeldenummer: 00104184.7
(22) Anmeldetag: 29.02.2000
(51) Int. Cl.: F21S 8/04, F21V 8/00

(54) **Beleuchtungsanordung**
Lighting system
Système d'éclairage

(30) Priorität: 08.03.1999 DE 19910273; 10.05.1999 DE 29908139 U
(43) Veröffentlichungstag der Anmeldung: 13.09.2000
(73) Patentinhaber: Pöllet, Wilfried, 90596 Schwanstetten (DE)
(72) Erfinder: Pöllet, Wilfried, 90596 Schwanstetten (DE)

(56) Entgegenhaltungen:
- EP-A- 0 678 700
- EP-A- 0 846 915
- BE-A- 759 881
- DE-A- 4 309 804
- FR-A- 817 194
- US-A- 5 241 462

## Beschreibung

Die Erfindung betrifft eine Beleuchtungsanordnung gemäß dem Oberbegriff des Anspruches 1.

Eine derartige Beleuchtungsanordnung ist aus der FR 817 194 A (dort insbesondere Fig.3/4) als Dekorelement in Form einer Glasplatte bekannt, die vor einer Wandleuchte gehaltert ist. Deren im wesentlichen rohrförmig eine Lampenfassung umgebendes, von der Wand vorragendes lichtundurchlässiges Gehäuse endet im Bereiche des Glaskolbens der darin gehalterten Glühlampe mit einem aufgeweiteten Stirnbereich. Der ist von der Glasplatte abgedeckt, wobei die Glühlampe sich noch durch ein zentrales Loch in der Glasplatte hindurch erstreckt. Auf der anderen Seite der Glasplatte, dem Lampengehäuse gegenüber, sind das Loch in der Glasplatte und der hier hindurchragende Glaskolben der Lampe von einer lichtundurchlässigen Haube abgedeckt, die an ihrem Rand durch die Glasplatte hindurch mir dem Stirnrand des Gehäuses auf der gegenüberlegenden Seite der Glassplatte verbunden ist und dadurch die Glasplatte zur Halterung vor dem Gehäuse in der Querschnittsmittenebene des Glaskolbens einspannt. Dadurch erfolgt die Lichtabstrahlung von der Lampe aus dem Gehäuse heraus nur bei dieser Montagefuge seitlich in die Glasplatte hinein, die Lichtabstrahlung in die Umgebung erfolgt dann erst radial weit davon entfernt, längs des umlaufend angefasten Randes der Glasplatte. Die Beleuchtungswirkung ist dadurch auf ein schmales Lichtband reduziert, was insbesondere in Zusammenhang mit einer dekorativ berandeten Glasplatte etwa als Minimalbeleuchtung an der Wand eines Treppenhause interessant erscheinen mag, was aber keine für die Bedürfnisse an einem Arbeitsplatz genügende Beleuchtung ergibt.

Aus der BE 759 881 A ist es bekannt, einen Strahler mit eine Lampe aufnehmendem, parabolförmigem Reflektor in einem hohlzylindrischen Gehäuse aus lichtundurchlässigem Material von unten, der Lichtabstrahlrichtung entgegen, durch eine Öffnung in eine Zwischendecke hineinzuschieben, bis außen an das Gehäuse angelenkte Blattfedern hinter der Decke seitlich abspreizen und durch ihr Hintergreifen der Decke das Lampengehäuse darin gegen einen unterhalb der Decke am Gehäuse umlaufenden Bund axial verspannen. Das führt zu einer singulären, entsprechend grell nur nach unten abstrahlenden Lichtöffnung in der lichtundurchlässigen, das Lampengehäuse halternden Decke.

Ebenfalls zum Hohldeckeneinbau mit rückwärtiger Federstab-Verspreizung bestimmt ist das massiv gläserne Reflektorgehäuse nach DE 43 09 804 A1, das zusätzlich zur Nutzlichtabstrahlung eine gewisse ringförmig aufgehellte Einbauumgebung des Strahlers nach Maßgabe der Wandstärke des gläsernen Reflektors erbringt.

Bei einer Beleuchtungsanordnung, wie sie etwa als "WIPO-Strahlerleiste vario" auf dem Markt ist, dient als gemeinsamer Träger für mehrere nebeneinander angeordnete Einbaustrahler ein flacher und schmaler Kasten von gegenüber den Abmessungen der einzelnen Strahlergehäuse nur etwas größerer Breite und Tiefe. In dessen gestreckten Deckel sind die Strahlergehäuse in einer Flucht distanziert nebeneinander eingebaut, und zusätzlich nimmt dieser Kasten einen Netzschalter sowie ein Netzteil für die Speisung von Niedervolt-Halogenlampen auf. Solch ein Kasten wird etwa direkt unter das Bodenbrett eines Oberschrankes über einer zu beleuchtenden Arbeitsplatte geschraubt, was wegen der einfachen Montage besticht, was aber wegen des dadurch (infolge der im Schlagschatten gelegenen Sichtseite des Kastens) hervorgerufenen massiven dunklen Streifens gestalterisch zu wünschen übrig läßt, jedenfalls ästhetisch nicht recht befriedigen kann. In der Praxis ist deshalb als sozusagen unauffälligerer Träger für die Einbau-Strahlergehäuse seit langem auch die Verwendung jenes Bodenbrettes selbst anzutreffen. Das muß dafür mit in Abstrahlrichtung sich öffnenden, zum kraftschlüssigen Einbau genau dem äußeren Durchmesser der Strahlergehäuse angepaßten Sack- oder Durchgangsbohrungen ausgestattet werden, deren maßgerechtes und schonendes Einbringen durch die sichtseitige Kaschierung der Unterfläche hindurch oft kritisch und jedenfalls recht arbeitsaufwendig ist.

Der Fachmann gewinnt den Eindruck, daß bezüglich solch einer Arbeitsplatz-Beleuchtungseinrichtungen seit fast zwei Jahrzehnten ein Stillstand der Entwicklung eingetreten ist. Jedenfalls fehlen seit langem den Markt belebende oder gar epochemachende Neuentwicklungen, welche die Innenausstatter zu neuen Arrangements anregen könnten.

Deshalb liegt vorliegender Erfindung die Aufgabe zugrunde, hier Abhilfe und lichttechnisch unter Kombination von Nutz- und Dekorlicht etwas einerseits kostengünstiges und andererseits ebenso auffälliges wie nützliches Neues zu schaffen, das sich im lichttechnischen Bereich vielseitig abwandeln und einsetzen läßt.

Nach der im Hauptanspruch gekennzeichneten erfindungsgemäßen Lösung wird wenigstens ein lichtdurchlässiges Strahlergehäuse in einen Träger aus lichtleitendem Material wie Marmor, Glas oder Kunststoff, bevorzugt in eine massive Acrylglas-Platte, eingesetzt. Es handelt sich also nicht um die aus dem Leuchtenbau bekannte, bloße Ummantelung einer Lampe mit einem opaken Hohlkörper, der gewissermaßen als Lampenschirm dient; und es handelt sich bei der erfindungsgemäßen Lösung auch nicht um die bekannten gläsernen Informationstafeln, die von einer Stablampe längs einen Seitenrandes bestrahlt werden, um eine im Mittenbereich der Platte eingravierte Information durch daran auftretendes Streulicht erkennbar werden zu lassen.

Die erfindungsgemäße Beleuchtungsanordnung dagegen besticht dadurch, daß sie einerseits in gewohnter Weise aus der Einbauumgebung heraus großzügig Nutzlicht etwa vertikal auf eine Arbeitsfläche - oder bedarfsweise auch abweichend von der Vertikalen gegen einen auszuleuchtenden Gegenstand - liefert; während andererseits ihre Trägerplatte auch noch als zusätzlicher, markanter Strahlungskörper wirkt, der je nach seiner Oberflächenbeschaffenheit und Raumform sehr unterschiedliche Beleuchtungseigenschaften aufweist. Durch die in jeder Richtung weit über den Einbaudurchmesser der lichtdurchlässigen Strahler-Gehäuse hinaus sich erstreckende Platte entsteht der Eindruck einer gefälligen da extrem flachen, auf jegliche Vorbauten und Aufbauten verzichtenden Strahlerkonstruktion bei scheinbar selbständig mit Rundum-Effekt strahlendem Lampenumbau in Form der lichtführenden Einbauplatte.

So liefern die Schmalseiten der Platte, also gewöhnlich die Schnittflächen, zumal dann, wenn sie durch Granulat-Bestrahlung oder durch Belegung aufgerauht sind, einen nach Maßgabe der Plattendicke schmalen umlaufenden Streifen sehr effektvollen opaken Lichts, das matt-diffus und deshalb weich, also ohne jede Blendwirkung, im wesentlichen quer zur Nutzlicht-Abstrahlung in Richtung auf den Betrachter gerichtet ist. Wenn dagegen wenigstens einige der Oberflächen einschließlich der Seitenwandungen der Platte poliert sind, dann überwiegen insoweit Brechungseffekte, welche die Platte weniger als großflächig konfigurierte Lichtquelle denn als lichtdurchströmten kristallenen Raum erscheinen lassen, zumal wenn die schmalen Seitenflächen nicht eben sondern leicht konvex vorgewölbt poliert sind.

Wenn die abstrahlseitige, also die Aufnahmeöffnungen für die lichtdurchlässigen Strahlergehäuse großflächig umgebende Oberfläche der lichtführenden Montageplatte mit einer lichtdurchlässigen sogenannten Prismenscheibe oder dergleichen Rasterscheibe belegt ist, dann führt deren z.B. mit einer Struktur aus kleinsten Pyramiden ausgestattete Abstrahlfläche dazu, daß weniger-diffuses Streulicht aus dieser Oberfläche parallel und zusätzlich zum Nutzlicht in Richtung auf die darunter gelegene Arbeitsplatte abstrahlt, ohne daß es zu irgendwelchen Streulicht-Blendeffekten beim davor Beschäftigten kommen kann, auch nicht wenn dieser flach (also unter spitzem Winkel und deshalb nur auf die Pyramiden-Seitenwände) gegen diese Abstrahlfläche schaut. Bei steilerem Blick gegen die Prismenplatte bzw. auf eine über die Prismenplatte bestrahlten Fläche ergeben sich dagegen optisch ansprechende Interferenzmuster.

Die von der Platte ausgehenden Lichteindrücke können in ihrer Farbe von denjenigen der direkten Nutzlicht-Abstrahlung gezielt abweichen, indem die Platte selbst und/oder die lichtdurchlässigen Strahlergehäuse, bzw. die Übergänge von diesen in die umgebende Platte hinein, eingefärbt sind. Farbig durchscheinende Strahlergehäuse bzw. deren Wandungen umgebende Farbmanschetten sind besonders dann von Vorteil, wenn die Farbeindrücke lokal unterschiedliche eingefärbte Schwerpunkte aufweisen aber in Zwischenbereichen einander zu Mischlicht überlagern sollen. Eine entsprechende Verteilung von Farbpigmenten im Material der Platte wäre schon deshalb unrealistisch, weil dafür bereits vor der Plattenherstellung die Einbaulage der einzelnen Strahlergehäuse genau festgelegt worden sein müßte.

Die lichtleitende Platte mit den in ihre Hohlräume eingesetzten Strahlern kann zur Halterung in einen Tragrahmen eingelegt oder mittels Durchgangsschrauben direkt auf einer Montagefläche befestigt werden. Bei dieser kann es sich um den eingangs erwähnten Schrankboden handeln, aber etwa auch um eine Wand oder um eine Schwenkeinrichtung zur räumlichen Ausrichtung der von der Platte ausgehenden Lichteffekte. Wenn die lichtleitende Platte unter einer Decke abgehängt ist, dann wird diese von Streulicht aus der oberen Oberfläche der Platte bestrahlt, was interessante Lichteffekte und zusätzliche Reflexionen außer in Richtung der Nutzlicht-Abstrahlung nach unten auch noch in der Umgebung der Platte erbringt. Insbesondere lassen sich damit vielfältige Lichtornamente schaffen, indem z.B. verschieden ornamental berandete Platten nach ihren geometrischen Formen gruppiert und/oder in unterschiedlichen Abständen für unterschiedliche Überlappungsbereiche ihres Reflexlichts vor einer Wand oder unter einer Decke positioniert werden.

Der besondere Reiz der strahlenden Platte wird noch gefördert, wenn sie nicht mittels einer Mehrfachbefestigung unter einer horizontalen oder vor einer vertikalen Tragkonstruktion gehaltert wird, sondern gewissermaßen frei schwebend infolge einer nur einseitigen, starren Aufhängung mittels eines schmalen Haltearmes, der z.B. frei vorkragend den Rand der Platte exzentrisch umgreift. Wenn dieser Haltearm bis zum Rand eines in die Platte eingelassenen Strahler-Gehäuses reicht, kann dessen Verkabelung unauffällig durch den Haltearm geführt werden. Dadurch bleibt die lichtleitende Platte selbst unverletzt, was störende Reflexe im Innern der Platte vermeidet, die aber auftreten würden, wenn dort Bearbeitungen wie Gravuren oder Bohrungen zur Leitungsführung vorgenommen werden müßten.

So erbringt die erfindungsgemäße Lösung einen ganz neuartigen, vielseitig einsetzbaren kombinatorischen Beleuchtungseffekt aufgrund einer Überlagerung gebündelter Nutzlicht-Abstrahlung - insbesondere von der Lampe wenigstens eines Halogenstrahlers - mit gezielt initiierter Streulichtabstrahlung von Kanten und/oder Flächen eines plattenförmigen (nicht zwingend ebenen) Lichtleiters, in den die auch seitlich (in die Platte hinein) abstrahlende Lampe eingesetzt ist. Insbesondere besticht eine dünne Trägerplatte für wenigstens einen Halogenstrahler durch ein mit den Plattenseitenflächen in der Plattenebene distanziert um die Nutzlicht-Abstrahlung herum umlaufendes schmales, blendfrei weiches Lichtband. Zusätzlich kann in Richtung der Nutzlicht-Abstrahlung Streulicht aus der Lichtleiter-Platte ausgekoppelt werden (beispielsweise gerichtet durch eine vorzugsweise unter die lichtabgebende Platten-Oberfläche montierte Rasterscheibe); aber gegebenenfalls statt dessen oder zusätzlich auch der Nutzlicht-Abstrahlung entgegen zur Reflexion an der distanzierten Tragkonstruktion für die Platte. Lokale Einfärbungen des in die Platte eingekoppelten bzw. des von der Platte abgestrahlten Lichts und/oder ornamentale Berandungen der lichtabstrahlenden Flächen bzw. der Platte selbst sowie variable Gruppierungen solcher Streulicht-Strahlerplatten gleicher oder unterschiedlicher Formgebung in unterschiedlichen Abständen unter einer Decke oder vor einer Wand eröffnen ganz neue, preiswerte Möglichkeiten zur effektvollen lichttechnischen Gliederung von Großräumen.

Hinsichtlich zusätzlicher Abwandlungen und Weiterbildungen der Erfindung wird auf die Unteransprüche und auf nachstehende Beschreibung angenähert maßstabsgerecht skizzierter Realisierungsbeispiele zur erfindungsgemäßen Lösung verwiesen. In der Zeichnung zeigt:
- Fig. 1: eine abgehängte Lichtleitplatte mit mehreren darin quer zur Plattenebene orientiert eingebauten, auch in die Platte selbst abstrahlenden Halogenlampen-Strahlergehäusen und
- Fig. 2: eine exzentrisch gehalterte Platte mit einem Halogenlampen-Strahlergehäuse.

Die Zeichnung zeigt als Beleuchtungseinrichtungen 11 jeweils eine im Querschnitt durch ihre Längsachse skizzierte breite, in diesen Beispielsfällen ebene Platte 12 aus lichtleitendem Material wie insbesondere Acrylglas. Diese ist mit wenigstens einer Sack- oder Durchgangs-Bohrung 13 ausgestattet, in welche flach-topfförmige Strahler-Gehäuse 14 zur auswechselbaren mechanischen Halterung und zur elektrischen Speisung von Lampen 15 kraftschlüssig eingesetzt sind. Bei den Lampen 14 kann es sich um Halogen-Lampen handeln, aber auch um dünne Kaltkathoden-Röhrchen, die z.B. in die Strahler-Gehäuse 14 eingewunden sind. Die Durchmesser der Gehäuse 14 sind wesentlich kleiner als die Queroder gar als die Längsabmessungen der als Einbau-Träger dienenden Platte 12. Die axiale Höhe der Gehäuse 14 erreicht maximal die Dicke der Träger-Platte 12. Ein flacher konkaver Reflektor 16 zwischen Lampe 15 und Gehäuse-Boden 17 erbringt eine vergleichsweise geringe Bündelung der Nutzlichts 18, das aber doch vorzugsweise mit einem Öffnungswinkel in der Größenordnung von z.B. nur 60° oder weniger wie skizziert quer zur Hauptebene der Platte 12 z.B. gegen eine darunter auszuleuchtende Arbeitsplatte 19 abgestrahlt wird.

Zumindest die hohlzylindrisch umlaufenden Seitenwände 20 der in die Platte 12 eingesenkten Gehäuse 14 sind aus lichtdurchlässigem (eventuell translucentem - jedenfalls nicht unbedingt transparentem) Material wie Preßglas oder Kunststoff erstellt, vorzugsweise in Spritzguß- oder Preßformtechnik einstückig mit dem Gehäuse-Boden 17 ausgebildet. Der den Querschnitt eines Gehäuses 14 überspannende Reflektor 16 weist einen solchen Abstand von der Lampe 15 bzw. eine so geringe axiale Höhe auf, daß er nicht zu nennenswerter Abschattung der seitlichen (also bezüglich des Gehäuses 14 radialen) Abstrahlung der Lampe 15 in Richtung etwa parallel zur Hauptebene der Platte 12 in diese hinein führt, wie aus der Zeichnung ersichtlich. Dadurch strömt ein beträchtlicher Teil des von einer Lampe 15 erzeugten Lichts durch die Gehäuse-Seitenwand 20 hindurch unter flachem Winkel bezüglich der abstrahlseitigen Oberfläche 21 und damit im wesentlichen unter Totalreflektion in die dadurch als Lichtleiter wirkende Platte 12 hinein. Insbesondere dann, wenn die schmalen Schnittkanten, also die Platten-Seitenflächen 22 durch Belegung oder durch Partikel-Bestrahlung fein aufgerauht sind, wie in der Zeichnung nur grob angedeutet, wird hier Licht aus der Platte 12 diffus brechend ausgegeben, so daß der Verlauf der Plattenseitenflächen 22 als schmaler umlaufender, auffallend dekorativer und blendfreier Linienstrahler für (gerade im kontrastierenden Gegensatz zum quer dazu gebündelten, geradezu grellen Nutzlicht 18) sehr weiches Streulicht 23 wirkt.

Eine Belegung der abstrahlseitigen Platten-Oberfläche 21 mit einer vorzugsweise durchgehenden, dünnen Rasterscheibe 29 erbringt nicht nur den Vorteil, dadurch eine versenkte Aufhängung der Platte 12 etwa an Spannschrauben 24 - und außerdem die Halogen-Lampen 15 in den abstrahlseitigen Gehäuseöffnungen - kaschieren zu können; sondern sie führt auch zu weiterer Aufhellung des Bereiches unter der Platte 12 bei deutlicher Reduzierung direkter Streulicht-Bestrahlung des Betrachters von dieser (bezüglich der Strahler-Gehäuse 14 und der umlaufenden Seitenflächen 22) vergleichsweise sehr großen Fläche 21 her, weil dadurch das aus der abstrahlseitigen Oberfläche 21 austretende Streulicht im wesentlichen vertikal gerichtet wird. Das Raster kann dafür in üblicher Weise aus leistenförmigen Lichtleitelementen erstellt sein; zweckmäßiger ist jedoch eine feingliedrige Pyramidenanordnung, deren im wesentlichen unbeleuchteten Seitenwände dann im Blickfeld des Betrachters liegen.

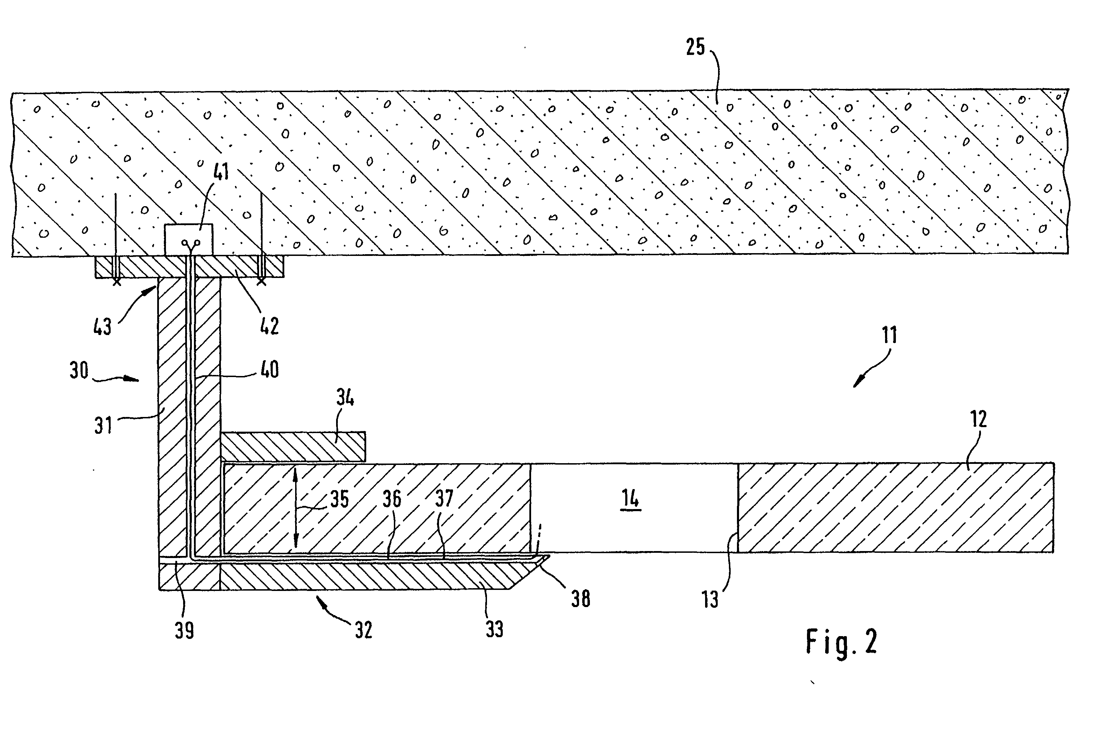

Die so lichtführende Platte 12 kann mittels eines schmalen Halterahmens (Fig.2) oder mittels die Platte 12 durchgreifender Spannschrauben 24 direkt unter einer Tragkonstruktion 25 wie dem Unterboden eines Hängeschrankes über der Arbeitsplatte 19 befestigt werden. Für den Betrachter des Arbeitsraumes über der Arbeitsplatte 19 ergibt sich ein sehr heller Lichteindruck ohne Blendwirkung, weil die Arbeitsfläche unmittelbar durch direkt einfallendes Nutzlicht 18 - und zusätzlich der darüber gelegene Raum - ringsum durch das Streulicht 23 aufgehellt wird. Optisch störende Dunkelzonen sind dadurch vermieden.

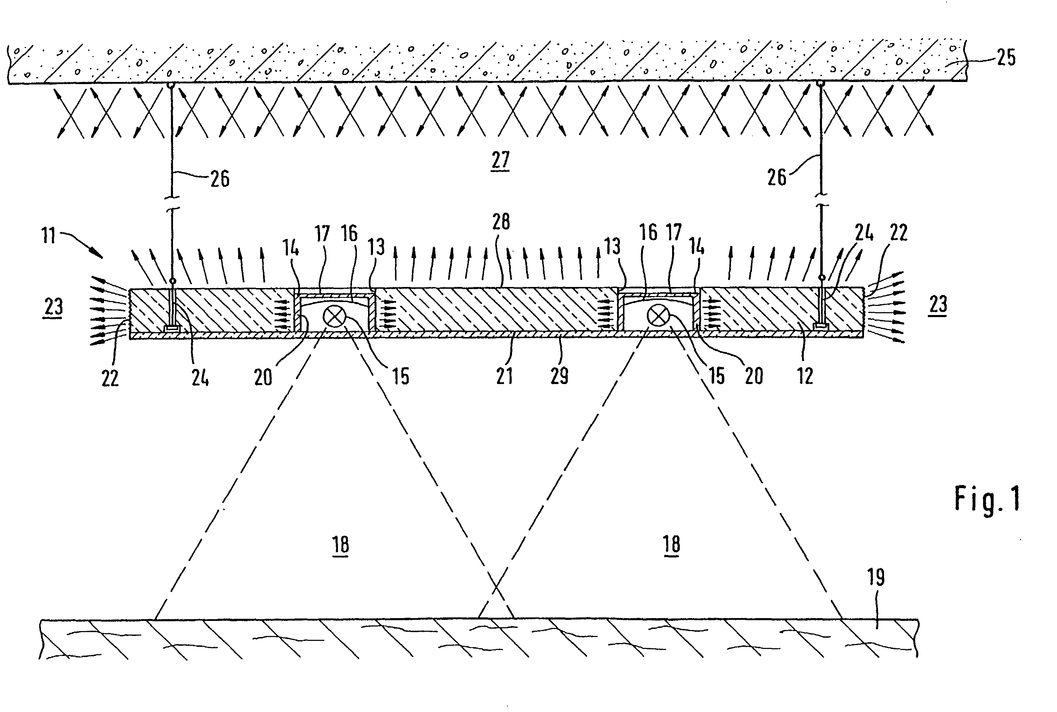

Wenn statt einer anliegenden Montage aber für die lichtleitende, den Strahler 14 aufnehmende Platte 12 gemäß Fig.1 eine Abhängung 26 mit größerer Distanz zu der Tragkonstruktion 25 (etwa der Decke eines Raumes) gewählt wird, erbringt das zusätzliches Reflexlicht 27 - von der flächigen Abstrahlung an der Rückseite 28 der Platte 12 nach oben - auch noch eine Strahlung in den die Platte 12 umgebenden Raum hinein, wie in der Zeichnung berücksichtigt. Diese zusätzliche Strahlung 27 kann ebenfalls wieder durch eine Rasterscheibe (entsprechend 29), nun auf der rückwärtigen Oberfläche 28 der Platte 12, modifiziert sein. Das ermöglicht je nach der farbig und/oder geometrisch lichtdurchlässigen Ausstattung der Platten-Rückseite 28, ihres Abstandes von einer reflektierenden geschlossenen Fläche (Wand oder Raumdecke) oder von einer unterbrochenen Fläche (Fachwerk) der Tragkonstruktion 25, ferner auch in Abhängigkeit von der Verteilung der Strahler-Gehäuse 14 in der ebenen oder dreidimensional verformten Platte 12, der lokalen Lichteinfärbung beim Übertritt des Lichts in die Platte 12 und der geometrischen Berandung mehrerer miteinander gruppierter Platten 12 die eingangs erwähnten mannigfaltigen dekorativen Lichteffekte bis hin zur optischen Gliederung großer Räume; das schafft also ganz neue Möglichkeiten der optischen Großraum-Unterteilung durch gezielte dekorative, am Arbeitsplatz nützliche Lichtakzente.

Das vorstehend zu Fig. 1 Ausgeführte trifft sinngemäß auch auf die Anordnung der erfindungsgemäßen Beleuchtungseinrichtung nach Fig. 2 zu, die gegenüber der Mehrpunk-t-Abhängung bei Fig. 1 durch exzentrischen Angriff einer Halterung in Verbindung mit der Kantenabstrahlung der Platte einen geradezu frei schwebenden Eindruck vermittelt. Dafür ist ein L-förmiger Haltearm 30 vorgesehen, der mit einem Distanz-Schenkel 31 die - hier z.B. kreisrunde, im Zentrum mit dem Strahler-Gehäuse 14 bestückten - Platte 12 parallel zu ihrer Hochachse in einem schmalen Randbereich tangiert. Dieser Randbereich wird U-förmig vom klammerförmig gespaltenen zweiten oder Halte-Schenkel 32 radial umgriffen, wofür dieser in einen Hohlträger 33 und einen distanziert parallel dazu verlaufenden Stützträger 34 aufgespalten sein kann. In den parallel zum Distanz-Schenkel 31 sich erstreckenden Zwischenraum 35 greift die Platte 12 quer zum Distanz-Schenkel 31 mit einem schmalen Sektor formschlüssig ein. So wird sie durch einfaches Einschieben in den zweiteiligen Halte-Schenkel 33-34 getragen.

Wenigstens der Hohlträger 33, der auf seiner an die Platte 12 anliegenden Oberfläche einen Längskanal 36 aufweist, reicht bis über den Rand des Strahler-Gehäuses 14. Ein hier aus dem Gehäuse 14 austretendes Speisekabel 37 kann deshalb am freien Stirnende 38 des Hohlträgers direkt in den Kanal 36 übertreten und dann durch eine Quer- oder Längsbohrung 39 bzw. 40 unsichtbar geführt austreten, z.B. zum Anschluß an einen in die Tragkonstruktion versenkten Auslaß 41 hinter einem kragen- oder laschenförmigen Befestigungsfuß 42 am freien Ende 43 des Distanz-Schenkels 31. Wenn wie in Fig.2 skizziert der längere Träger 33 sichtseitig, also unter der Platte 12 angeordnet ist, wird dadurch der Verlauf des Kabels 337 im offenen Kanal 36 kaschiert. Gestalterisch vorteilhafter kann es jedoch sein, entgegen der Darstellung in Fig.2 sichtseitig, also abstrahlseitig nur einen möglichst kurzen Träger 34 vorzusehen und den lang bis zur Gehäuse-Bohrung 13 vorkragenden Träger 33 hinter die Platte 12 zu verlegen, um die Abstrahlung aus der Vorderseite 21 (Fig. 1) der Platte 12 möglichst wenig abzuschatten.

Entgegen der Beispielsdarstellung der Fig. 2 kann also statt des langen, zum Plattenzentrum mit dem dort eingelassenen Gehäuse 14 reichenden Hohlträgers 33 auch der dagegen wesentlich kürzere Stützträger 34 sicht- und abstrahlseitig gelegen sein; wobei man dann allerdings u.U. in Ansicht gegen die Platte 12 den Verlauf des zur Platte 12 hin offenen Kanales 36 für das Kabel 37 zusätzlich zu kaschieren hat. Wesentlich ist aber, daß aufgrund dieses nur seitlich am Plattenrand angeklemmten Haltearmes 30 jede Verletzung der Platte 12, nämlich jede mechanische (insbesondere spanabhebende) Bearbeitung der lichtleitenden Platte 12 zur Aufnahme von Befestigungen und zur Kabelverlegung völlig vermieden sind, so daß keine störenden Reflexe an Bearbeitungsstellen auftreten können.

## Patentansprüche

1. Beleuchtungsanordnung (11) mit wenigstens einem Strahler, dessen in einem Gehäuse (14) gehalterte Lampe (15) von einer Bohrung (13) in einer lichtleitenden Platte (12) aus seitlich in Richtung der Hauptebene der Platte (12) in diese einstrahlt, **dadurch gekennzeichnet, daß** ein in die Bohrung (13) der Platte (12) eingesenktes flachtopfförmiges Strahler-Gehäuse (14) mit einem axial flachen Reflektor (16) zwischen der Lampe (15), insbesondere einer Halogenlampe (15), und dem Boden (17) des Gehäuses (14) vorgesehen ist, aus dem die Lampe (15) sowohl quer zur Hauptebene der Platte (12) Nutzlicht (18) abstrahlt als auch durch die lichtdurchlässiges Material aufweisende hohlzylindrische Seitenwand (20) des Gehäuses (14) hindurch in die Platte (12) hineinstrahlt.

2. Beleuchtungsanordnung nach dem vorangehenden Anspruch, **dadurch gekennzeichnet, daß** der Strahler ein Gehäuse (14) mit einer bereichsweise lichtdurchlässigen Seitenwand (20) aufweist.

3. Beleuchtungsanordnung nach einem der vorangehenden Ansprüche, **dadurch gekennzeichnet, daß** die axiale Höhe des Gehäuses (14) maximal die Dicke der Platte (12) erreicht.

4. Beleuchtungsanordnung nach einem der vorangehenden Ansprüche, **dadurch gekennzeichnet, daß** das von der Lampe (15) des Strahlers in die Platte (12) übertretende Licht eine Einfärbung erfährt.

5. Beleuchtungsanordnung nach einem der vorangehenden Ansprüche, **dadurch gekennzeichnet, daß** wenigstens Teilbereiche der seitlichen Stirnflächen (21) der Platte (12) zur Abstrahlung von Streulicht (23) aufgerauht oder rauh belegt sind.

6. Beleuchtungsanordnung nach einem der vorangehenden Ansprüche, **dadurch gekennzeichnet, daß** wenigstens eine abstrahlseitige Oberfläche (21) der Platte (12) wenigstens bereichsweise mit einer Rasterscheibe (29) belegt ist.

7. Beleuchtungsanordnung nach einem der vorangehenden Ansprüche, **dadurch gekennzeichnet, daß** die Platte (12) vor oder unter eine Tragkonstruktion (25) montiert ist.

8. Beleuchtungsanordnung nach einem der vorangehenden Ansprüche, **dadurch gekennzeichnet, daß** die Platte (12) unter eine Tragkonstruktion (25) abgehängt ist und gegen diese, der Nutzlicht-Abstrahlung (18) entgegen, eine Streulichtabstrahlung liefert.

9. Beleuchtungsanordnung nach einem der Ansprüche 1 bis 7, **dadurch gekennzeichnet, daß** die Platte (12) mittels wenigstens eines Haltearmes (30) unter oder vor der Tragkonstruktion (25) montiert ist, der den Plattenrand klammerförmig umgreift.

10. Beleuchtungsanordnung nach Anspruch 9, **dadurch gekennzeichnet, daß** der Haltearm (30) mit einem Hohlträger (33), in dem ein Speisekabel (37) geführt ist, vom Plattenrand bis zu einem in die Platte (12) eingelassenen Gehäuse (14) vorragt.

## Claims

1. A lighting assembly (**11**) with at least one emitter, the lamp (**15**) of which being held in a housing (**14**), emitting from a bore (**13**) in a light transmission panel (**12**) sideways into the panel in the direction of the major plane of said panel (**12**), **characterized in that**
there is provided a flat, pot shaped emitter housing (**14**) which is set in said bore (**13**) of said panel (**12**) including an axially flat reflector (**16**) between the lamp (**15**), in particular a halogen lamp (**15**), and the bottom (**17**) of the housing (**14**), the lamp (**15**) radiating useful light (**18**) both transversely to the major plane of the panel (**12**) as well as through the hollow cylindrical sidewall (**20**) of the housing (**14**) into the panel (**12**), the sidewall including a translucent material.

2. The lighting assembly as in the preceding claim, **characterized in that** emitter contains a housing (**14**) with a partially translucent sidewall (**20**).

3. The lighting assembly as in one of the preceding claims, **characterized in that** the axial height of the housing (**14**) does not exceed the thickness of the panel (**12**).

4. The lighting assembly as in one of the preceding claims, **characterized in that** the light passing from the lamp (**15**) of the emitter into the panel (**12**) is subject to coloration.

5. The lighting assembly as in one of the preceding claims, **characterized in that** at least partial areas of the side end surfaces (**21**) of the panel (**12**) are roughened or coated with a rough layer for the emission of scattered light (**23**).

6. The lighting assembly as in one of the preceding claims, **characterized in that** at least one surface (**21**) of the panel (**12**) on the radiating side is covered with a screen disk (**29**).

7. The lighting assembly as in one of the preceding claims, **characterized in that** the panel (**12**) is mounted in front of or beneath a support construction (**25**).

8. The lighting assembly as in one of the preceding claims, **characterized in that** the panel (**12**) is suspended beneath a support construction (**25**) and supplies radiated scattered light against said support construction in the opposite direction to that of the radiated useful light (**18**).

9. The lighting assembly as in one of claims 1 to 7, **characterized in that** the panel (**12**) is mounted beneath or in front of the support construction (**25**) by means of a holding arm (**30**) which clamps around the edge of the panel.

10. The lighting assembly as in claim 9, **characterized in that** the holding arm (**30**) including a hollow carrier (**33**) in which a feeder cable (**37**) is being guided protrudes from the edge of the panel to the housing (**14**) being recessed in the panel (**12**).

## Revendications

1. Système d'éclairage (11) comprenant au moins un projecteur, dont la lampe (15) maintenue dans un boîtier (14) envoie de la lumière à partir d'un perçage (13) dans une plaque (12) guidant la lumière par le côté en direction du plan principal de la plaque (12) dans cette plaque, **caractérisé en ce qu'**un boîtier de projecteur (14) en forme de pot aplati et enfoncé dans le perçage (13) de la plaque (12) est prévu avec un réflecteur (16) plat axialement entre la lampe (15), en particulier une lampe halogène (15), et le fond (17) du boîtier (14), à partïr duquel la lampe (15) dégage de la lumière utile (18) transversalement au plan principal de la plaque (12), la fait passer à travers la paroi latérale (20), en forme de cylindre creux et présentant du matériau perméable à la lumière, du boîtier (14) et l'envoie dans la plaque (12).

2. Système d'éclairage selon la revendication précédente, **caractérisé en ce que** le projecteur présente un boîtier (14) avec une paroi latérale (20) perméable par endroits.

3. Système d'éclairage selon l'une quelconque des revendications précédentes, **caractérisé en ce que** la hauteur axiale du boîtier (14) atteint au maximum l'épaisseur de la plaque (12).

4. Système d'éclairage selon l'une quelconque des revendications précédentes, **caractérisé en ce que** la lumière allant de la lampe (15) du projecteur à la plaque (12) subit une coloration.

5. Système d'éclairage selon l'une quelconque des revendications précédentes, **caractérisé en ce qu'**au moins des zones partielles des faces frontales (21) latérales de la plaque (12) sont rendues rugueuses ou sont garnies de façon rugueuse pour le rayonnement de la lumière diffuse (23).

6. Système d'éclairage selon l'une quelconque des revendications précédentes, **caractérisé en ce qu'**au moins une surface (21) côté réflexion de la plaque (12) est pourvue d'un disque de trame (29) au moins par endroits.

7. Système d'éclairage selon l'une quelconque des revendications précédentes, **caractérisé en ce que** la plaque (12) est montée avant ou au-dessous d'une structure porteuse (25).

8. Système d'éclairage selon l'une quelconque des revendications précédentes, **caractérisé en ce que** la plaque (12) est accrochée au-dessous d'une structure porteuse (25) et fournit une réflexion de lumière diffusée vers cette structure porteuse, dans le sens contraire au rayonnement de la lumière utile (18).

9. Système d'éclairage selon l'une quelconque des revendications 1 à 7, **caractérisé en ce que** la plaque (12) est montée au moyen d'au moins un bras de retenue (30) au-dessous ou devant la structure porteuse (25) qui entoure le bord de plaque à la façon d'une pince.

10. Système d'éclairage selon la revendication 9, **caractérisé en ce que** le bras de retenue (30) dépasse avec un support creux (33), dans lequel est guidé un câble d'alimentation (37), depuis le bord de la plaque jusqu'à un boîtier (14) enfoncé dans la.plaque (12).
